(19) Europäisches Patentamt
European Patent Office
Office européen des brevets

(11) **EP 4 140 736 A1**

(12) **EUROPEAN PATENT APPLICATION**
published in accordance with Art. 153(4) EPC

(43) Date of publication:
**01.03.2023 Bulletin 2023/09**

(51) International Patent Classification (IPC):
**B32B 27/00** $^{(2006.01)}$    **C09D 5/16** $^{(2006.01)}$
**C09D 183/04** $^{(2006.01)}$    **C09J 183/04** $^{(2006.01)}$
**C09J 7/38** $^{(2018.01)}$

(21) Application number: **21792016.4**

(22) Date of filing: **10.02.2021**

(52) Cooperative Patent Classification (CPC):
**B32B 7/022; B32B 27/00; C09D 5/16;
C09D 183/00; C09D 183/04; C09J 7/38;
C09J 183/04; E04H 17/00**

(86) International application number:
**PCT/JP2021/004880**

(87) International publication number:
**WO 2021/215081 (28.10.2021 Gazette 2021/43)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.04.2020 JP 2020077169**

(71) Applicant: SHIN-ETSU CHEMICAL CO., LTD.
**Tokyo 1000005 (JP)**

(72) Inventors:
• **ENDO Akihiro**
  **Annaka-shi, Gunma 379-0224 (JP)**
• **IMAIZUMI Keiji**
  **Annaka-shi, Gunma 379-0224 (JP)**
• **YODA Masahiro**
  **Annaka-shi, Gunma 379-0127 (JP)**

(74) Representative: **Sonnenhauser, Thomas Martin
Wuesthoff & Wuesthoff
Patentanwälte PartG mbB
Schweigerstraße 2
81541 München (DE)**

(54) **SILICONE COMPOSITE STAIN-RESISTANT SHEET AND CONSTRUCTION METHOD USING SAME TO PREVENT GRAFITTI**

(57)    The present invention is an anti-fouling silicone composite sheet including a substrate layer, and a silicone adhesive layer stacked on one surface of the substrate layer, and having a hardness of 5 or less measured with an Asker C hardness tester and an adhesive force of 5 N/25 mm or more with respect to a mortar test piece, in which a surface of the substrate layer which is located on a side opposite to the surface where the silicone adhesive layer is stacked is a surface anti-fouling-treated with a silicone hard coating agent containing a fluorine-containing silicone compound. This can provide: an anti-fouling silicone composite sheet capable of exhibiting anti-fouling performance and washability stably for a long period, easily attachable to an adherend, and followable even to cracking and shifting on the application surface; and a method for preventing graffiti by using the anti-fouling silicone composite sheet.

[FIG. 1]

**Description**

TECHNICAL FIELD

The present invention relates to an anti-fouling silicone composite sheet and a method for performing a prevention of graffiti by using the anti-fouling silicone composite sheet.

BACKGROUND ART

Cases where graffiti are produced with oil-based paint on surfaces of structure such as piers, fences, and so forth, are raised as social problems. In addition, since such graffiti cannot be removed easily, the removal requires tremendous labors and costs.

The demands for easy and quick graffiti removal have been increasing. For example, Patent Document 1 discloses that after the surface of a concrete structure to be treated is painted with a primer and a clear paint for intermediate coating, a topcoat clear paint having a function to facilitate the removal of graffiti and poster is applied; thereby, a graffiti can be removed by attaching a cloth gaffer tape for packaging having been cut to a predetermined length to the surface with graffiti and firmly rubbing the cloth gaffer tape with hand, followed by forcefully peeling off the cloth gaffer tape.

However, since the graffiti removal as described above requires attaching the cloth gaffer tape for packaging having been cut to a predetermined length to the surface with graffiti, firmly rubbing the gaffer tape with hand, and then forcefully peeling off the gaffer tape for packaging, these cause a problem of low operability during the graffiti removal operation.

Hence, to inhibit attachment of graffiti, it has been proposed to form an anti-fouling coating film, for example, by applying a paint containing silicone oil or wax onto those architecture surfaces, or by painting the surfaces with a reactive silicone-based resin paint (see Patent Documents 2 to 4). Moreover, Patent Document 5 proposes a method in which a surface treatment agent containing particular organopolysiloxanes is applied and spread over the coating surface of an automobile or the like to form a coating film enabling easy removal of fouling component attached thereto.

However, the reactive silicone resin-based paint and surface treatment agent as described above have problems that their anti-graffiti performances lower over time, and that when the materials are painted to large thicknesses by roller application or brush application, the coating films dried at normal temperature form cracks over time. Additionally, although these methods enable graffiti removal, graffiti itself is possible. Accordingly, problems occur that graffiti is drawn again after graffiti removal in many cases. In other words, the conventional techniques do not exhibit a function for suppressing "graffiti-drawing action" and hence have a problem that graffiti actions and removals are repeated.

CITATION LIST

PATENT LITERATURE

Patent Document 1: JP 2005-262134 A
Patent Document 2: JP H06-182290 A
Patent Document 3: JP H09-94524 A
Patent Document 4: JP H10-216619 A
Patent Document 5: JP 2005-97527 A

SUMMARY OF INVENTION

TECHNICAL PROBLEM

As countermeasures to solve the above problems, it is conceivable to provide an anti-fouling layer with a surface having been subjected to anti-fouling treatment. Nevertheless, in view of long-term anti-fouling performance and washability, if an anti-fouling layer has low weather resistance, this brings about problems that the anti-fouling performance and washability are gradually lowered, and the sheet cannot sufficiently exhibit functions of graffiti prevention and simple washing.

The present invention has been made in view of such circumstances. An object of the present invention is to provide: an anti-fouling silicone composite sheet capable of exhibiting anti-fouling performance and washability stably for a long period, easily attachable to an adherend, and followable even to cracking and shifting on the application surface; and a method for performing a prevention of graffiti by using the anti-fouling silicone composite sheet.

SOLUTION TO PROBLEM

To solve the problems, the present invention provides an anti-fouling silicone composite sheet comprising:

a substrate layer; and
a silicone adhesive layer stacked on one surface of the substrate layer, and having a hardness of 5 or less measured with an Asker C hardness tester and an adhesive force of 5 N/25 mm or more with respect to a mortar test piece, wherein a surface of the substrate layer which is located on a side opposite to the surface where the silicone adhesive layer is stacked is a surface anti-fouling-treated with a silicone hard coating agent containing a fluorine-containing silicone compound.

The inventive anti-fouling silicone composite sheet has the substrate layer in which the surface located on the side opposite to the surface where the silicone adhesive layer is stacked has undergone anti-fouling treatment. This makes it possible to prevent a person who tries to write graffiti from writing desired drawing. By this effect, a person who tries to write graffiti would lose the motivation for graffiti, so that the graffiti action itself can be suppressed. Moreover, even when graffiti is drawn, the anti-fouling treatment enables the graffiti erasure by simple washing.

Moreover, the silicone adhesive layer stacked on the substrate layer is easily attachable to an adherend and followable even to cracking and shifting on the application surface. Additionally, since the main component is silicone, the silicone adhesive layer is excellent in weather resistance, heat resistance, and cold resistance, and can keep the function for a longer period. Further, the silicone adhesive layer has a waterproof effect, so that it can prevent infiltration of water into the application spot, prevent degradation of the application object, or considerably delay the progress of the degradation.

Furthermore, the anti-fouling treatment is a treatment with the silicone hard coating agent to which the fluorine-containing silicone compound is added. This makes the weather resistance favorable, and can keep the anti-fouling performance and washability stably for a long period.

Moreover, the anti-fouling treatment is preferably water repellent treatment, oil repellent treatment, or both the treatments.

Since such treatment(s) cause repelling of water-based paint, oil-based paint, or both these paints, and thus can be suitably employed for the anti-fouling silicone composite sheet.

Furthermore, the substrate layer is preferably an anti-UV-treated layer.

Such a material has further favorable long-term weather resistance.

Additionally, the substrate layer is further preferably a substrate layer anti-UV-treated with a silicone hard coating agent containing an anti-UV compound.

Such a material can further enhance the long-term weather resistance, also has favorable compatibility with the silicone hard coating agent to which the fluorine-containing silicone compound serving as an anti-fouling agent is added, and can prevent degradation regarding interfacial peeling etc.

Moreover, the substrate layer preferably comprises a PET film.

Such a material is advantageous in terms of cost, and suitable in terms of availability and easiness of surface treatment.

Further, the substrate layer or the silicone adhesive layer preferably has an anti-light-reflective effect.

Such materials can suppress optical glare and light reflection in and on the anti-fouling silicone composite sheet, and can protect nearby passers-by from being dazzled.

More preferably, the substrate layer has a thickness of 0.05 to 0.3 mm, the adhesive layer has a thickness of 0.5 to 3 mm, and the anti-fouling silicone composite sheet has a total thickness of 0.55 to 3.3 mm.

Such a configuration makes the attachability and physical strength favorable, and is advantageous in terms of cost.

Furthermore, the anti-fouling silicone composite sheet is preferably for preventing graffiti.

Such an anti-fouling silicone composite sheet is quite suitably utilizable to prevent graffiti.

The present invention also provides a method for performing a prevention of graffiti, the method comprising:

attaching the silicone adhesive layer of the inventive anti-fouling silicone composite sheet to a certain adherend; and
exposing the anti-fouling treated surface of the substrate layer to prevent graffiti on the adherend.

According to such a method, by using the inventive anti-fouling silicone composite sheet, the prevention can be performed in a primer-less manner. Thus, even if water remains on the adhesion surface, the method can be carried out only by adequately wiping the surface with a rag, or the like, and therefore, the method can be started immediately after the weather gets better.

ADVANTAGEOUS EFFECTS OF INVENTION

The inventive anti-fouling silicone composite sheet has the substrate layer with the anti-fouling treated surface which is located on the side opposite to the surface where the silicone adhesive layer is stacked. This makes it possible to prevent a person who tries to write graffiti from writing desired drawing. Moreover, by this effect, a person who tries to write graffiti would lose the motivation for graffiti, so that the graffiti action itself can be suppressed. Further, even if graffiti is drawn, the anti-fouling treatment enables graffiti removal easily by washing.

Moreover, by performing the anti-fouling treatment with the silicone hard coating agent to which a fluorine-containing silicone compound is added, the weather resistance can be made favorable and the anti-fouling performance and washability can be stably kept for a long period.

Furthermore, the silicone adhesive layer stacked on the substrate layer is easily attachable to an adherend, and followable to crack, displacement, asperity, etc., on the application surface. In addition, since the main component is silicone, the weather resistance, heat resistance, and cold resistance are excellent, and the function can be kept for a longer period. Further, since the silicone adhesive layer has waterproof effect, it is possible to prevent water infiltration into the application spot, and prevent degradation of the application object or considerably delay the degradation progress.

BRIEF DESCRIPTION OF DRAWINGS

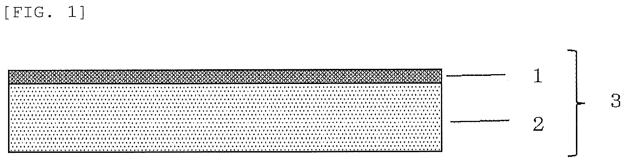

FIG. 1 is a schematic drawing illustrating an example of the inventive anti-fouling silicone composite sheet.

DESCRIPTION OF EMBODIMENTS

As noted above, there have been demands for the development of: an anti-fouling silicone composite sheet which exhibits anti-fouling performance and washability stably for a long period, and which is easily attached to an adherend and followable to cracking and shifting on the application surface; and a method for preventing graffiti by using the sheet.

The present inventors have earnestly studied the above problems and consequently found that when a silicone adhesive layer having a hardness of 5 or less measured with an Asker C hardness tester and an adhesive force of 5 N/25 mm or more with respect to a mortar test piece is stacked on one surface of a substrate layer and a surface located on the opposite side thereto of the substrate layer is a surface anti-fouling-treated with a silicone hard coating agent containing a fluorine-containing silicone compound, the resulting anti-fouling silicone composite sheet stably exhibits anti-fouling performance and washability for a long period, and is easily attachable to an adherend and followable even to crack and displacement of the application surface. The present inventors completed the present invention based on this finding.

Specifically, the present invention relates to an anti-fouling silicone composite sheet comprising:

a substrate layer; and

a silicone adhesive layer stacked on one surface of the substrate layer, and having a hardness of 5 or less measured with an Asker C hardness tester and an adhesive force of 5 N/25 mm or more with respect to a mortar test piece, wherein a surface of the substrate layer which is located on a side opposite to the surface where the silicone adhesive layer is stacked is a surface anti-fouling-treated with a silicone hard coating agent containing a fluorine-containing silicone compound.

In addition, the present invention relates to a method for performing a prevention of graffiti, the method comprising:

attaching the silicone adhesive layer of the inventive anti-fouling silicone composite sheet to a certain adherend; and exposing the anti-fouling treated surface of the substrate layer to prevent graffiti on the adherend.

Hereinafter, the present invention will be described in detail, but the present invention is not limited thereto.

<Anti-fouling Silicone Composite Sheet>

The inventive anti-fouling silicone composite sheet includes:

a substrate layer; and

a silicone adhesive layer stacked on one surface of the substrate layer, and having a hardness of 5 or less measured with an Asker C hardness tester and an adhesive force of 5 N/25 mm or more with respect to a mortar test piece.

A surface of the substrate layer which is located on a side opposite to the surface where the silicone adhesive layer is stacked is a surface anti-fouling-treated with a silicone hard coating agent containing a fluorine-containing silicone compound.

Such an anti-fouling silicone composite sheet has the substrate layer with an anti-fouling-treated surface which is located on the side opposite to the surface where the silicone adhesive layer is stacked. Thus, it is possible to prevent a person who tries to write graffiti from writing a drawing as desired. Moreover, a person who tries to write graffiti would lose the motivation for graffiti by this effect, so that the graffiti action itself can be suppressed. Further, even when graffiti is drawn, the anti-fouling treatment enables the graffiti removable by simple washing. Furthermore, the anti-fouling treatment with the silicone hard coating agent containing a fluorine-containing silicone compound keeps the anti-fouling performance stably for a long period.

Moreover, the silicone adhesive layer stacked on the substrate layer is easily attachable to an adherend, and followable to crack, displacement, asperity, and others on the application surface. Further, since silicone is the main component, the weather resistance, heat resistance, and cold resistance are excellent, and the function can be kept for a longer period. Furthermore, since the silicone adhesive layer has waterproof effect, it is possible to prevent water infiltration into the application spot, prevent degradation of the application object, or considerably delay the degradation progress. The physical properties of the silicone adhesive layer will be described later.

Meanwhile, in order to achieve considerable reduction of the work period, it is necessary to use not a type to be cured at operation site but a type having been prepared into a sheet form before the operation. From this point, the inventive anti-fouling silicone composite sheet has a stacking structure including: a substrate layer; and a silicone adhesive layer molded on one surface of the substrate layer, can be stored for a long-term, has the long working life, and enables simple application. Hence, the work period can also be reduced. Note that the silicone adhesive layer is preferably protected with a cover film when the inventive anti-fouling silicone composite sheet is not used or until just before used.

Hereinbelow, the silicone adhesive layer and the substrate layer included in the inventive anti-fouling silicone composite sheet will be described individually.

[Silicone Adhesive Layer]

The silicone adhesive layer constituting the inventive anti-fouling silicone composite sheet is not particularly limited, as long as the hardness measured with an Asker C hardness tester is 5 or less and the adhesive force with respect to a mortar test piece is 5 N/25 mm or more. The silicone adhesive layer preferably has the following features.

The silicone composition which can be used as the silicone adhesive layer constituting the inventive anti-fouling silicone composite sheet is preferably an addition-curable silicone composition containing the following components (A) to (D) and whose cured product has surface adhesiveness:

(A) an organopolysiloxane containing at least two alkenyl groups bonded to silicon atoms per molecule;
(B) an alkenyl group-containing resinous copolymer mainly containing an $R^2_3SiO_{1/2}$ unit (where $R^2$ represents an unsubstituted or substituted monovalent hydrocarbon group, but $R^2$ includes an alkenyl group) and a SiOz unit (note that the component (B) is preferably incorporated in the composition but the content may be 0 parts by mass.);
(C) an organohydrogenpolysiloxane containing at least two hydrogen atoms bonded to silicon atoms (SiH groups) per molecule; and
(D) an addition-reaction catalyst.

The silicone composition is preferably an addition-curable silicone composition whose cured product has surface adhesiveness. The silicone adhesive layer is preferably formed from this cured product.

Hereinafter, the components (A) to (D) will be described in more details.

[Component (A)]

In the addition-curable silicone composition, the component (A) is an organopolysiloxane having at least two alkenyl groups on average in a molecule. As the organopolysiloxane of the component (A), it is possible to use one shown by the following average composition formula (I):

$$R^1_aSiO_{(4-a)/2} \cdots (I).$$

In the formula, $R^1$'s are identical to or different from one another, and are each an unsubstituted or substituted monovalent hydrocarbon group having preferably 1 to 10, more preferably 1 to 8 carbon atoms. "a" is a positive number in a range of preferably 1.5 to 2.8, more preferably 1.8 to 2.5, further preferably 1.95 to 2.05. Here, examples of the unsubstituted or substituted monovalent hydrocarbon group represented by $R^1$ and bonded to a silicon atom include alkyl groups, such as a methyl group, an ethyl group, a propyl group, an isopropyl group, a butyl group, an isobutyl group, a tert-butyl group, a pentyl group, a neopentyl group, a hexyl group, a cyclohexyl group, an octyl group, a nonyl group, and a decyl group; aryl groups, such as a phenyl group, a tolyl group, a xylyl group, and a naphthyl group; aralkyl groups, such as a benzyl group, a phenylethyl group, and a phenylpropyl group; alkenyl groups, such as a vinyl group, an allyl group, a propenyl group, an isopropenyl group, a butenyl group, a hexenyl group, a cyclohexenyl group, and an octenyl group; groups obtained from these groups by substituting some or all of hydrogen atoms thereof with a halogen atom, such as fluorine, bromine, or chlorine, a cyano group, etc., for example, a chloromethyl group, a chloropropyl group, a bromoethyl group, a trifluoropropyl group, and a cyanoethyl group; etc. Preferably, methyl groups account for 90% or more of all $R^1$'s by mole.

In this case, per molecule of the component (A), at least two $R^1$'s are alkenyl groups (each of which preferably has 2 to 8 carbon atoms, further preferably 2 to 6 carbon atoms). Note that the alkenyl group content in all the organic groups $R^1$ (i.e., the unsubstituted or substituted monovalent hydrocarbon groups) is preferably 0.00001 to 0.05 mol/g, more preferably 0.00001 to 0.01 mol/g. The alkenyl groups may be bonded to silicon atoms at ends of the molecular chain, may be bonded to silicon atoms in the middle of the molecular chain, or may be bonded at both. Preferably, the organopolysiloxane contains alkenyl groups bonded to at least silicon atoms at both ends of the molecular chain. When the alkenyl group content is 0.00001 mol/g or more, sufficient rubber physical properties are obtained. When the content is 0.05 mol/g or less, the hardness does not become too high, and the adhesive force is kept sufficiently.

The polymerization degree is not particularly limited, and is preferably such that the organopolysiloxane is liquid at normal temperature. Normally, the average polymerization degree of suitably used organopolysiloxane is preferably 50 to 20,000, more preferably 100 to 10,000, further preferably 100 to 2,000 or so, which are in terms of polystyrene according to gel permeation chromatography (GPC).

Moreover, basically, as the structure of this organopolysiloxane of the component (A), it preferably has a linear structure in which the main chain is composed of repeated diorganosiloxane units ($R^1{}_2SiO_{2/2}$) and both ends of the molecular chain are blocked with triorganosiloxy groups ($R^1{}_3SiO_{1/2}$) or hydroxydiorganosiloxy groups (($HO)R^1aSiO_{1/2}$). The structure may partially have a branched structure, cyclic structure, or the like.

[Component (B)]

The resinous copolymer (i.e., copolymer having a three-dimensional network structure) of the component (B) mainly contains an $R^2{}_3SiO_{1/2}$ unit and a $SiO_2$ unit. Here, $R^2$ represents an unsubstituted or substituted monovalent hydrocarbon group (including an alkenyl group) having preferably 1 to 10, particularly preferably 1 to 8 carbon atoms. Examples of the monovalent hydrocarbon group shown by $R^2$ include alkyl groups, such as a methyl group, an ethyl group, a propyl group, an isopropyl group, a butyl group, an isobutyl group, a tert-butyl group, a pentyl group, a neopentyl group, a hexyl group, a cyclohexyl group, an octyl group, a nonyl group, and a decyl group; aryl groups, such as a phenyl group, a tolyl group, a xylyl group, and a naphthyl group; aralkyl groups, such as a benzyl group, a phenylethyl group, and a phenylpropyl group; alkenyl groups, such as a vinyl group, an allyl group, a propenyl group, an isopropenyl group, a butenyl group, a hexenyl group, a cyclohexenyl group, and an octenyl group; groups obtained from these groups by substituting some or all of hydrogen atoms thereof with a halogen atom, such as fluorine, bromine, or chlorine, a cyano group, etc., for example, a chloromethyl group, a chloropropyl group, a bromoethyl group, a trifluoropropyl group, and a cyanoethyl group; etc.

The resinous copolymer of the component (B) may be composed of only the $R^2{}_3SiO_{1/2}$ unit and $SiO_2$ unit. As necessary, an $R^2{}_2SiO$ unit and an $R^2SiO_{3/2}$ unit ($R^2$ is as defined above) may also be contained in a total amount ranging from preferably 50% or less, more preferably 40% or less, based on the total mass of the copolymer. The $R^2{}_3SiO_{1/2}$ unit and the $SiO_2$ unit are contained in a molar ratio ($R^2{}_3SiO_{1/2}/SiO_2$) of preferably 0.5 to 1.5, particularly preferably 0.5 to 1.3. When the molar ratio is in these ranges, sufficient rubber hardness and strength are obtained.

Further, the resinous copolymer of the component (B) has an alkenyl group, preferably at least two alkenyl groups per molecule. The alkenyl group content is preferably 0.0001 mol/g or more, more preferably in a range of 0.0001 to 0.001 mol/g. When the alkenyl group content is 0.0001 mol/g or more, sufficient rubber physical properties are obtained. When the content is 0.001 mol/g or less, the hardness is appropriate and the adhesive force is kept more reliably.

The resinous copolymer of the component (B) may be a liquid having fluidity (for example 10 mPa·s or more, preferably 50 mPa·s or more) or a solid having no fluidity at normal temperature (25°C). In the case of solid state, it may be dissolved in an organic solvent, such as toluene. This resinous copolymer can be produced normally by hydrolyzing appropriate chlorosilane or alkoxysilane according to a method well-known in this art.

The components (A), (B) are blended in such amounts that where the total of the components (A) and (B) is 100 parts by mass, the component (A) is in a range of preferably 20 to 100 parts by mass, more preferably 20 to 90 parts by mass, particularly preferably 30 to 90 parts by mass; meanwhile, the component (B) is in a range of preferably 0 to 80 parts by mass, more preferably 10 to 80 parts by mass, particularly preferably 10 to 70 parts by mass. When the amount of the components (A) and (B) blended is within these ranges, rubber physical properties are favorable. From the viewpoints of adhesiveness and strength, the components (A) and (B) are preferably used in combination.

[Component (C)]

The component (C) is an organohydrogenpolysiloxane having at least two, preferably three or more hydrogen atoms bonded to silicon atoms (SiH groups) per molecule. The component (C) acts as a curing agent for curing the composition through crosslinking by hydrosilylation addition reaction between the SiH groups in this molecule and the alkenyl groups bonded to silicon atoms in the components (A) and (B).

As the organohydrogenpolysiloxane of the component (C), it is possible to use one shown by the following average composition formula (II):

$$R^3{}_b H_c SiO_{(4-b-c)/2} \cdots \qquad (II)$$

where $R^3$ represents an unsubstituted or substituted monovalent hydrocarbon group having 1 to 10 carbon atoms. Moreover, "b" is 0.7 to 2.1, "c" is 0.001 to 1.0, and b+c is a positive number satisfying 0.8 to 3.0. It is suitable to use ones having at least two (normally 2 to 200), preferably 3 to 100, more preferably 3 to 50, hydrogen atoms bonded to silicon atoms per molecule. Here, examples of the monovalent hydrocarbon group as $R^3$ include those exemplified as $R^1$. Preferably, the monovalent hydrocarbon group has no aliphatic unsaturated group. In addition, "b" is preferably 0.8 to 2.0, "c" is preferably 0.01 to 1.0, and b+c is preferably 1.0 to 2.5. The molecular structure of the organohydrogenpolysiloxane may be any of linear, cyclic, branched, and three-dimensional network structures.

In this case, the number of silicon atoms (or polymerization degree) in a molecule is preferably 2 to 300, and it is particularly suitable to use the component (c) in a liquid state at room temperature (25°C) with 4 to about 150 silicon atoms. Note that the hydrogen atoms bonded to silicon atoms may be located either at ends of the molecular chain or at the middle of the molecular chain, or may be located at both. Preferably, the silicon-atom-bonded hydrogen atoms are located at ends of the molecular chain because the reaction rate is fast. That is, specific examples of the component (C) include methylhydrogenpolysiloxanes blocked at both ends with trimethylsiloxy groups, dimethylsiloxane-methylhydrogensiloxane copolymers blocked at both ends with trimethylsiloxy groups, dimethylpolysiloxanes blocked at both ends with dimethylhydrogensiloxy groups, dimethylsiloxane-methylhydrogensiloxane copolymers blocked at both ends with dimethylhydrogensiloxy groups, copolymers composed of $(CH_3)_2HSiO_{1/2}$ and $SiO_{4/2}$ units, copolymers composed of $(CH_3)_2HSiO_{1/2}$, $SiO_{4/2}$, and $(C_6H_5)SiO_{3/2}$ units, etc.

The organohydrogenpolysiloxane as the component (C) is blended in an amount of preferably 0.5 to 20 parts by mass, preferably particularly 1.0 to 10 parts by mass, based on 100 parts by mass of the total of the components (A) and (B). When the blend amount is within such ranges, sufficient rubber strength is obtained. Moreover, the organohydrogenpolysiloxane of the component (C) is blended such that the molar ratio of the amount of silicon atom-bonded hydrogen atoms (SiH groups) in the component (C) relative to the silicon atom-bonded alkenyl groups contained in the components (A) and (B) is preferably 0.5 to 1.1, more preferably 0.6 to 1.0. Simultaneously, the organohydrogen is preferably blended in an amount of 0.005 to 0.010 mol/g, given that the addition crosslinking reaction progresses 100%.

Now, the molar ratio of the SiH groups of the component (C) relative to the alkenyl group amount present in the system is referred to as H/Vi. Additionally, the following theoretical crosslinking amount refers to a crosslinking amount in a case where 100% of silicon atom-bonded hydrogen atoms (SiH groups) in the component (C) added into the system react with the alkenyl groups present in the system. Thus, if H/Vi is 1 or less, the SiH group amount is theoretical crosslinking amount; if H/Vi is 1 or more, the alkenyl group amount is the theoretical crosslinking amount. The amounts of these functional groups may be based on the calculation formula in designing the composition, but are more preferably values actually measured. The actual measurements of these functional group amounts can be carried out, for example, by measuring the amount of hydrogen gas generated or unsaturated groups according to known analysis methods, or by NMR analysis. The amount of a functional group in the system can be expressed by $X \times Y$ mol/g, where the amount of the functional group in a molecule is represented by X mol/g, and the added amount is represented by Y parts by mass.

[Component (D)]

The component (D) may be a conventionally known material. Normally, a material containing a platinum-group metal-based addition-reaction catalyst typified by platinum or a platinum compound is used (normally, 1 to 1,000 ppm based on all the alkenyl group-containing organopolysiloxanes of the components (A) and (B)).

[Other Components]

In addition to the above-described components, the composition for forming the silicone adhesive layer may be blended as necessary with other component(s) including: fillers, such as fumed silica, precipitated silica, quartz powder, diatomaceous earth, and calcium carbonate; electroconductive agents, such as carbon black, conductive zinc white, and metal powders; and fillers, such as heat resistance modifiers including iron oxide and cerium oxide. Further, the composition is optionally blended with: hydrosilylation reaction regulators, such as nitrogen-containing compounds, acetylene compounds, phosphorus compounds, nitrile compounds, carboxylates, tin compounds, mercury compounds, and sulfur compounds; internal release agents, such as dimethylsilicone oil; tackifiers; thixotropic agents; etc.

[Physical Properties of Silicone Adhesive Layer]

Next, description will be given of the physical properties of the silicone adhesive layer included in the inventive anti-fouling silicone composite sheet.

In the present invention, the silicone adhesive layer has a hardness of 5 or less as measured with an Asker C hardness tester. The hardness is preferably less than the hardness of the substrate layer, more preferably 2 or less, further preferably 1 or less. If the Asker C hardness exceeds 5, the adhesiveness is lowered. Note that the lower limit is 0.

Meanwhile, the hardness of the silicone adhesive layer is further preferably measured in terms of Asker CSR-2 type hardness. In this way, even when the hardness in terms of Asker C hardness is in a range less than 1, the measurement is possible with less variation, and the hardness of the silicone adhesive layer can be evaluated more reliably.

Specifically, the hardness of the silicone adhesive layer is preferably lower than the hardness of the substrate layer, and the hardness measured with a CSR-2 type hardness tester (available from KOBUNSHI KEIKI CO., LTD.) is preferably a positive number of 50 or less. This hardness is more preferably a positive number in a range of 10 or more and 20 or less.

This CSR-2 type hardness tester is suitable for the hardness measurement of Asker C hardness in a range of less than 1. The hardness feeling in this range has such a hardness level that when the adherent surface is touched with a finger and then the finger is slowly moved apart from the adherent surface, the adherent surface follows the finger. If an increase in the adhesive force lowers the hardness of the adhesive layer, this is advantageous. Meanwhile, with the hardness of 3 or more according to a CSR-2 type hardness tester, even when the anti-fouling silicone composite sheet is pasted on an adherend surface made of a porous material such as asphalt or mortar, the hardness is sufficient, so that a problem that the adhesive layer flows away does not occur. In addition, the operability of pasting operation is not significantly lowered. Meanwhile, the CSR-2 type hardness of 20 or less is preferable because the adhesive force is sufficient large, so that the adhesion to the adherend surface is sufficient. The hardness of the silicone adhesive layer can be easily controlled by controlling molding and curing conditions to be described later.

As an index of the adhesiveness, adhesive force with respect to a mortar test piece is defined. A sheet prepared by a molding method to be described later is cut to have a width of 25 mm, and the adhesive layer side of this sheet is let adhere to a mortar test piece (width 50 mm × length 150 mm × thickness 10 mm, prepared in accordance with JIS R5201, and available from Engineering Test Service Co., Ltd.); after the resultant is left standing for 30 minutes at room temperature, a 180° peal test is conducted at a peel rate of 300 mm/min. In this event, the silicone adhesive layer incorporated in the inventive anti-fouling silicone composite sheet has an adhesive force of 5 N/25 mm or more, preferably 5 to 30 N/25 mm, particularly preferably 10 to 25 N/25 mm. As a standard of the adhesive force, if it is less than 5 N/25 mm with respect to a mortar test piece, the layer is easily peeled even with a weak force by hand. Meanwhile, when the adhesive force is 5 N/25 mm or more, the layer is not easily peeled by hand.

[Substrate Layer]

The substrate layer incorporated in the inventive anti-fouling silicone composite sheet has a surface anti-fouling-treated with a silicone hard coating agent containing a fluorine-containing silicone compound, and this surface is the surface located on the side opposite to the surface where the silicone adhesive layer is stacked.

The anti-fouling treatment performed on the surface of the substrate layer which is located on the side opposite to the surface where the silicone adhesive layer is stacked is preferably water repellent treatment, oil repellent treatment, or more preferably both. This treatment(s) make it possible to impart the effect of repelling water-based paint, oil-based paint, or both types to the anti-fouling silicone composite sheet. This effect can suppress drawing desired by a person who tries to write graffiti and can reduce the motivation for graffiti action. Moreover, graffiti can be easily removed by washing with water or solvent or by wiping, and the restoration to the state before graffiti is easily achieved.

For example, when a substrate anti-fouling-treated with a silicone hard coating agent to which a fluorine-containing silicone compound is added is used as the substrate layer having undergone an anti-fouling treatment for exhibiting both water-repelling and oil-repelling effects, the anti-fouling function can be kept stably for a long term. Since silicone has quite high weather resistance, even when the composite sheet is exposed to sunlight for outdoor use or the like, it is possible to prevent degradation of the anti-fouling layer and to suppress decrease in anti-graffiti performance and destruction of the anti-fouling layer during repeated washing, too.

The fluorine-containing silicone compound is preferably a perfluoroether compound in which a siloxane having a functional group is introduced, and further preferably the content percentage of fluorine atoms thereof is 25 mass% or more. Examples of the silicone hard coating agent containing such a fluorine-containing silicone compound include KR-400F available from Shin-Etsu Chemical Co., Ltd, etc.

The silicone hard coating agent can also contain, in addition to the fluorine-containing silicone compound, for example, a defoamer, a UV absorber, and so forth in certain amounts.

The substrate layer in the inventive anti-fouling silicone composite sheet is not particularly limited, as long as it is a substrate having high strength. In consideration of cost, availability, easiness of surface treatment, etc., a PET film is preferably used. It is also possible to use a PEN film, a PC film, a PEEK film, etc. The substrate layer may be a substrate rubber layer.

The substrate layer may be blended as necessary with, as other than the main component, a component(s) including: fillers, such as fumed silica, precipitated silica, quartz powder, diatomaceous earth, and calcium carbonate; electroconductive agents, such as carbon black, conductive zinc white, and metal powders; and fillers, such as heat resistance modifiers including iron oxide and cerium oxide. Further, the substrate layer is optionally blended with: hydrosilylation reaction regulators, such as nitrogen-containing compounds, acetylene compounds, phosphorus compounds, nitrile compounds, carboxylates, tin compounds, mercury compounds, and sulfur compounds; internal release agents, such as dimethylsilicone oil; tackifiers; thixotropic agents; etc.

Moreover, in consideration of long-term weather resistance, the substrate layer is preferably an anti-UV-treated layer. The substrate layer kneaded with an anti-UV agent and a film having anti-UV property by anti-UV coating treatment are preferably used.

In the case of using a substrate layer having undergone anti-UV coating treatment, when the anti-UV treatment is a treatment with a silicone hard coating agent containing an anti-UV compound, this enhances the affinity with the anti-fouling agent and can further enhance the long-term reliability of the anti-fouling property. Examples of such a silicone hard coating agent containing a fluorine-containing silicone compound include X-40-9309A available from Shin-Etsu Chemical Co., Ltd., etc.

Furthermore, a silicone hard coating agent containing an anti-UV compound can be mixed in advance with the silicone hard coating agent containing a fluorine-containing silicone compound and used as an anti-UV- and anti-fouling treatment agent.

Hereinbelow, some embodiments of the inventive anti-fouling silicone composite sheet will be described.

In the inventive anti-fouling silicone composite sheet, the substrate layer or the silicone adhesive layer preferably has an anti-light-reflective effect. Having an anti-light-reflective effect can suppress optical glare and light reflection in and on the anti-fouling composite sheet, and can protect nearby passers-by from being dazzled.

Examples of the method of imparting the anti-light-reflective effect include kneading a filler into the substrate layer or the adhesive layer, applying a filler-containing treatment agent to the film surface, etc.

Regarding the thickness of the anti-fouling silicone composite sheet, the substrate layer preferably has a thickness of 0.05 to 0.3 mm, the adhesive layer preferably has a thickness of 0.5 to 3 mm, and the composite sheet preferably has a total thickness of 0.55 to 3.3 mm.

When the thickness of the substrate layer is 0.05 mm or more, the anti-fouling silicone composite sheet has sufficient stiffness and favorable attachability and physical strength. Meanwhile, when the thickness is 0.3 mm or less, the stiffness becomes appropriate and facilitates the attachment to curved surfaces. Moreover, it is advantageous in terms of cost.

The thickness of the silicone adhesive layer is preferably in a range of 0.5 to 3 mm, more preferably in a range of 0.5 to 2 mm. When the thickness is 0.5 mm or more, the silicone adhesive layer can more reliably absorb the asperity of the adherend attachment surface. When the thickness is 3 mm or less, the dependency of the rubber strength of the attachment surface to the adhesive layer is so low that the rubber destruction does not occur.

The anti-fouling silicone composite sheet as described above is preferably used to prevent graffiti. Such an anti-fouling silicone composite sheet is suitably utilizable for graffiti prevention.

[Method for Forming Anti-fouling Silicone Composite Sheet]

A method for forming the anti-fouling silicone composite sheet will be described. Nevertheless, the method for forming the inventive anti-fouling silicone composite sheet is not limited to methods described below.

First, on a film to serve as the substrate layer, a film of the silicone hard coating agent containing a fluorine-containing silicone compound is formed by various methods, such as dipping, coating, and printing. Then, a surface treatment (anti-fouling treatment) is performed, so that the substrate layer having anti-fouling function imparted thereto is formed. As necessary, it is more preferable to perform anti-UV treatment and/or anti-light reflection treatment before the anti-fouling treatment. Additionally, the anti-fouling treatment on the substrate layer is preferably performed basically only on the surface opposite to the side where the silicone adhesive layer is stacked. In a case where both surfaces are subjected to anti-fouling treatment by dipping or the like, one of the surfaces may be protected in advance by masking etc.

When the silicone adhesive layer is stacked on the substrate layer, the silicone adhesive layer is subjected to a method such as dipping, coating, or screen printing on the substrate layer, so that the anti-fouling silicone composite sheet is obtained. Coating process is easily employable and preferable. Note that these curing conditions preferably range from 80 to 250°C and 10 seconds to 1 hour. Further, for the purposes of removing low-molecular-weight components and enhancing the film strength, for example, the anti-fouling silicone composite sheet may be conserved at room temperature to 40°C for 1 to 7 days or so, or may be post-cured at 60°C to 150°C for 10 to 60 minutes or so.

Next, a specific example of the inventive anti-fouling silicone composite sheet will be described with reference to the drawing.

FIG. 1 schematically shows an example of the inventive anti-fouling silicone composite sheet. An anti-fouling silicone composite sheet 3 shown in FIG. 1 includes a substrate layer 1 made of a film with one surface having undergone anti-fouling treatment; and a silicone adhesive layer 2 stacked on a surface of the substrate layer 1 which has not undergone anti-fouling treatment. The anti-fouling silicone composite sheet 3 is attached such that the adhesive layer covers, in a liquid-tight manner, at least a portion of a structure having a concrete structure, mortar structure, metallic structure, or the like, and therefore, the anti-fouling silicone composite sheet 3 has simply adhesiveness reliability for a long period, and is effectively used to prevent water infiltration and prevent degradation of the target object or delay the degradation over time. Moreover, the substrate layer 1 made of the film with the anti-fouling-treated surface imparts such physical properties that the anti-fouling silicone composite sheet 3 has high strength. Further, the substrate layer 1 has an effect of preventing graffiti or easily removing graffiti over long period. Furthermore, since the anti-fouling treatment is performed with a silicone hard coating agent to which a fluorine-containing silicone compound is added, the anti-fouling property can be demonstrated stably for a long period.

<Method for Performing Prevention of Graffiti>

The inventive method for preforming prevention of graffiti is characterized by: attaching the silicone adhesive layer of the inventive anti-fouling silicone composite sheet to a certain adherend; and exposing the anti-fouling treated surface of the substrate layer to prevent graffiti on the adherend.

The inventive anti-fouling silicone composite sheet having been described above can be used to prevent graffiti by attaching the adhesive layer to a target object (adherend). Now, an exemplary method thereof will be described.

For the attaching of the anti-fouling silicone composite sheet, an attaching portion of an adherend may be pre-treated to facilitate the attaching of the sheet. Nevertheless, since the anti-fouling silicone composite sheet itself has adhesiveness, the pre-treatment on the attaching portion is not always essential. The attaching is performed such that the silicone adhesive layer serving as the adherent surface of the anti-fouling silicone composite sheet faces the attaching side. In a case where the boundary portion on the adherend surface has such a step that the excessive stress is conceivably applied to the attaching surface, it is preferable to provide means for eliminating the step. For example, there is a method in which a backup material is used in the step.

Although it is not always essential to use a sealing material in pasting the anti-fouling composite sheet, a sealing material may be used at a boundary portion of the sheet to ensure more firm pasting or to simultaneously impart waterproof function. Note that the sealing material is not particularly limited, and any known one such as silicone-based, polysulfide-based, and polyurethane-based sealing materials are usable. From the viewpoint of affinity with the composite sheet material of the present invention, a silicone sealing material is suitably used. As such a sealing material, a commercially-available product may be used. For example, as the silicone sealing material, it is possible to use Sealant Master 300, Sealant 70, Sealant 701, and the like available from Shin-Etsu Chemical Co., Ltd.

In the inventive method for performing prevention of graffiti, the use of the inventive anti-fouling silicone composite sheet having adhesiveness enables primer-less application and makes it possible to considerably shorten the application period.

In many conventional techniques, anti-fouling coating films are formed by applying a paint containing silicone oil or wax to architecture surfaces or by painting the surfaces with a reactive silicone-based resin paint, for example, and moreover, a method is employed in which an anti-fouling film is attached using a primer or the like. However, there is a problem that when the water content is high and condensation and the like occur due to temperature difference by climate, weather, particularly rain, snow, etc., the application is impossible until the application surface is dried. The use of the inventive anti-fouling silicone composite sheet enables primer-less application, and therefore, the present invention has astonishing features that even when water remains on the adhesion surface, the application is possible only by adequate wiping with a wiping rag or the like, and the application can be started immediately after the weather gets better.

The inventive anti-fouling silicone composite sheet itself exhibits attachment function and shape keeping function owing to the adhesive force. Accordingly, the peeling is possible without damaging the adherend after use. Further, in a case where the anti-fouling composite sheet has transparency, the inside can be observed without peeling the sheet. Additionally, the ability to exhibit the attachment function owing to the adhesive force again after the reattachment is also remarkable feature.

EXAMPLE

Hereinafter, the present invention will be specifically described by way of Examples and Comparative Examples, but the present invention is not limited thereto. Note that, in the following examples, part(s) mean part(s) by mass.

[Example 1]

An anti-UV-PET film with a thickness of 0.1 mm was provided for use as the substrate layer. Further, a surface treatment solution was prepared by adding and mixing: 100 parts by mass of a silicone hard coating agent KR-400F containing a fluorine-containing silicone compound manufactured by Shin-Etsu Chemical Co., Ltd. as the surface treatment agent; and 0.05 parts by mass of FA-600 manufactured by Shin-Etsu Chemical Co., Ltd. as a defoamer. After the anti-UV-PET film was spin-coated with this surface treatment solution, the surface treatment solution was cured at 120°C for 5 minutes to form a film. Thereby, a substrate layer A having undergone anti-fouling treatment was prepared.

Meanwhile, a 50-mass%-toluene solution containing 92.5 parts of dimethylpolysiloxane blocked at both ends with dimethylvinylsiloxy groups and having an average polymerization degree of 1,000, and 7.5 parts of a resinous copolymer which was solid at room temperature (25°C) and composed of $(CH_2=CH)(CH_3)_2SiO_{1/2}$ unit, $(CH_3)_3SiO_{1/2}$ unit, and $SiO_2$ unit $[((CH_2=CH)(CH_3)_2SiO_{1/2}$ unit+ $(CH_3)_3SiO_{1/2}$ unit)/$SiO_2$ unit (molar ratio)=0.85, $CH_2=CH$-group content: 0.0008 mol/g] was put into a stirring mixer and mixed for 30 minutes. Then, the toluene was completely distilled off (alkenyl group amount: 0.00865 mol/g). To 100 parts of this silicone base, 6.0 parts of a SiH group-containing resinous copolymer mainly containing $(CH_3)_2HSiO_{1/2}$ unit and $SiO_2$ unit (SiH group amount: 0.0013 mol/g) as a crosslinking agent and 0.1 parts of ethynylcyclohexanol as a reaction regulator were added. Stirring was continued for 15 minutes. Thereby, a silicone rubber composition A was obtained. This silicone rubber composition was mixed with 0.2 parts of a platinum catalyst (Pt concentration: 1 mass%). Thus, an adhesive silicone composition A was obtained.

On the substrate layer A, 1.0 mm of the adhesive silicone composition A was stacked as a coating by using a comma coater, and cured by heating in a heating furnace at 140°C for 5 minutes to form a silicone adhesive layer. Thus, an anti-fouling silicone composite sheet A was obtained. The obtained anti-fouling silicone composite sheet A had an average thickness of 1.11 mm.

Moreover, the physical properties of the silicone adhesive layer of the obtained anti-fouling silicone composite sheet A were measured. The silicone adhesive layer had an Asker C hardness of less than 1, and an Asker CSR-2 type hardness of 13. Further, the adhesive force with respect to a mortar test piece (shown as "adhesive force to mortar" in Table 1) measured by the aforementioned method was 20 N/25 mm.

Table 1 shows the results of evaluating the anti-fouling silicone composite sheet A by methods described later. The evaluation methods in the following Example and Comparative Examples are the same as those in Example 1.

[Example 2]

A PEN film with a thickness of 0.1 mm was provided for use as the substrate layer. Further, a surface treatment solution was prepared by adding and mixing: 50 parts by mass of a silicone hard coating agent KR-400F containing a fluorine-containing silicone compound manufactured by Shin-Etsu Chemical Co., Ltd. as the surface treatment agent; and 50 parts by mass of X-40-9309A manufactured by Shin-Etsu Chemical Co., Ltd. as a silicone hard coating agent containing an anti-UV compound; and 0.05 parts by mass of FA-600 manufactured by Shin-Etsu Chemical Co., Ltd. as a defoamer. After the PEN film was spin-coated with this surface treatment solution, the surface treatment solution was cured at 120°C for 5 minutes to form a film. Thereby, a substrate layer B having undergone anti-fouling treatment was prepared. An anti-fouling silicone composite sheet B was obtained by the same process as in Example 1, except that the substrate layer B was used. The obtained composite sheet had an average thickness of 1.12 mm.

Moreover, the physical properties of the silicone adhesive layer of the obtained anti-fouling silicone composite sheet B were measured. The silicone adhesive layer had an Asker C hardness of less than 1, and an Asker CSR-2 type hardness of 15. Further, the adhesive force with respect to a mortar test piece was 17 N/25 mm.

[Comparative Example 1]

An anti-fouling silicone composite sheet C having an average thickness of 1.10 mm was obtained in the same manner as in Example 1, except that a 0.1-mm-thick untreated PET film not subjected to anti-fouling treatment unlike Examples 1 and 2 was used as a substrate layer C.

Moreover, the physical properties of the silicone adhesive layer of the obtained anti-fouling silicone composite sheet C were measured. The silicone adhesive layer had an Asker C hardness of less than 1, and an Asker CSR-2 type hardness of 14. Further, the adhesive force with respect to a mortar test piece was 19 N/25 mm.

[Comparative Example 2]

An anti-UV-PET film with a thickness of 0.1 mm was provided for use as the substrate layer. Further, a surface treatment solution was prepared by mixing: 100 parts by mass of a hard coating agent EBECRYL 40 manufactured by DAICEL-ALLNEX LTD. as the surface treatment agent; 142 parts by mass of 2-propanol as a diluent; 3 parts by mass of IRGACURE 184 manufactured by BASF Japan Ltd. as an initiator; and 5 parts by mass of KY-1203 manufactured by Shin-Etsu Chemical Co., Ltd. as an additive. After the anti-UV-PET film was spin-coated with this surface treatment solution, the surface treatment solution was preliminarily dried at 80°C for 1 minute, and further cured using a conveyor-type UV irradiation apparatus with a metal halide lamp in nitrogen atmosphere under conditions: lamp output of 80 W/cm and cumulative light amount of 1,200 mJ/cm2. Thereby, a substrate layer D with the anti-fouling-treated substrate layer was prepared. An anti-fouling silicone composite sheet D having an average thickness of 1.11 mm was obtained in the same manner as in Example 1, except that the substrate layer D was used.

Moreover, the physical properties of the silicone adhesive layer of the obtained anti-fouling silicone composite sheet D were measured. The silicone adhesive layer had an Asker C hardness of less than 1, and an Asker CSR-2 type hardness of 14. Further, the adhesive force with respect to a mortar test piece was 19 N/25 mm.

[Comparative Example 3]

A substrate layer A was obtained as in Example 1.

Meanwhile, a 50-mass%-toluene solution containing 92.5 parts of dimethylpolysiloxane blocked at both ends with dimethylvinylsiloxy groups and having an average polymerization degree of 1,000, and 7.5 parts of a resinous copolymer which was solid at room temperature (25°C) and composed of $(CH_2=CH)(CH_3)_2SiO_{1/2}$ unit, $(CH_3)_3SiO_{1/2}$ unit, and $SiO_2$ unit $[((CH_2=CH)(CH_3)_2SiO_{1/2}$ unit$+(CH_3)_3SiO_{1/2}$ unit$)/SiO_2$ unit (molar ratio)=0.85, $CH_2=CH$-group content: 0.0008 mol/g] was put into a stirring mixer and mixed for 30 minutes. Then, the toluene was completely distilled off (alkenyl group amount: 0.00865 mol/g). To 100 parts of this silicone base, 8.0 parts of a SiH group-containing resinous copolymer mainly containing $(CH_3)_2HSiO_{1/2}$ unit and $SiO_2$ unit (SiH group amount: 0.0013 mol/g) as a crosslinking agent and 0.1 parts of ethynylcyclohexanol as a reaction regulator were added. Stirring was continued for 15 minutes. Thereby, a silicone rubber composition B was obtained. This silicone rubber composition was mixed with 0.2 parts of a platinum catalyst (Pt concentration: 1 mass%). Thus, an adhesive composition B was obtained.

On the substrate layer A, 1.0 mm of the adhesive composition B was stacked as a coating by using a comma coater, and cured by heating in a heating furnace at 140°C for 5 minutes to form a silicone adhesive layer. Thus, an anti-fouling silicone composite sheet E having an average thickness of 1.11 mm was obtained.

Moreover, the physical properties of the silicone adhesive layer of the obtained anti-fouling silicone composite sheet E were measured. The silicone adhesive layer had an Asker C hardness of 22, and an Asker CSR-2 type hardness of 76. Further, the adhesive force with respect to a mortar test piece was 2 N/25 mm.

[Comparative Example 4]

A substrate layer A was obtained as in Example 1.

On the substrate layer A, 2.0 mm of the adhesive composition.B was stacked as a coating by using a comma coater, and cured by heating in a heating furnace at 140°C for 5 minutes to form a silicone adhesive layer. Thus, an anti-fouling silicone composite sheet F having an average thickness of 2.11 mm was obtained.

Moreover, the physical properties of the silicone adhesive layer of the obtained anti-fouling silicone composite sheet F were measured. The silicone adhesive layer had an Asker C hardness of 21, and an Asker CSR-2 type hardness of 72. Further, the adhesive force with respect to a mortar test piece was 3 N/25 mm.

<Evaluation Items>

Composite-sheet evaluation items and their evaluation methods are described below. Hereinafter, the anti-fouling silicone composite sheet in each example is simply referred to as "anti-fouling silicone composite sheet".

[Anti-Fouling Performance]

The substrate layer side of each anti-fouling silicone composite sheet was sprayed with one of an oil-based lacquer spray and a water-based lacquer spray for 2 seconds to check the repellency. The sheets were rated as "C" if repelling did not occur and the sprayed portion remained the same. The sheets were rated as "A" if the spray fell off and the spray shape collapsed. The sheets were rated as "B" if the spray partially fell off. The test was conducted twice; one was conducted when the sheets were in the initial states, and the other was conducted after a xenon-arc-accelerated exposure test (1000-hour aging). The xenon-arc-accelerated exposure test was in accordance with Method A of JIS K 7350-2.

[Washability]

The substrate layer side of each anti-fouling silicone composite sheet was sprayed with one of an oil-based lacquer spray and a water-based lacquer spray for 2 seconds, and dried at room temperature for 30 minutes. Then, stain transfer washing was performed using the adherent surface of an adhesive tape. The spraying and the transfer washing were repeated three times. The sheets were rated as "C" if the transfer washing was impossible. The sheets were rated as "A" if the transfer washing was possible. The test was conducted twice; one was conducted when the sheets were in the initial states, and the other was conducted after a xenon-arc-accelerated exposure test (1000-hour aging). The xenon-arc-accelerated exposure test was in accordance with Method A of JIS K 7350-2.

[Adhesiveness and Followability]

A composite sheet sample with a shape of 50 mm×100 mm was cut out from each anti-fouling silicone composite sheet. The adhesive layer of this composite sheet sample was attached to one surface of each of two mortar test pieces such that the areas of portions of the mortar test pieces where the composite sheet sample was attached were equal. The resultant was left standing for 24 hours at room temperature and pulled to the maximum of 20 mm from zero span. The samples were rated as "A" if the displacement of the sheet without peeling but following the mortar test pieces was 10 mm or more. The samples were rated as "B" if the displacement was 5 to 10 mm. The samples were rated as "C" if the displacement was less than 5 mm.

measurement apparatus: SHIMADZU AUTOGRAPH,
tensile speed: 50 mm/min.,
mortar test piece shape: 50mm×72mm×thickness 10 mm

[Table 1]

| | | Example 1 | Example 2 | Carparative Example 1 | Comparative Example 2 | Carparative Example 3 | Corparative Example 4 |
|---|---|---|---|---|---|---|---|
| Substrate layer | | substrate layer A | substrate layer B | substrate layer C | substrate layer D | substrate layer A | substrate layer A |
| Adhesive layer | | adhesive silicone composition A | adhesive silicone composition A | adhesive silicone composition A | adhesive silicone composition A | adhesive composition B | adhesive composition B |
| Thickness (mm) | | 1.11 | 1.12 | 1.10 | 1.11 | 1.11 | 2.11 |
| Anti-fouling performance | initial | A | A | C | A | A | A |
| | after exposure | B | B | - | C | B | B |
| Washability | initial | A | A | C | A | A | A |
| | after exposure | A | A | - | C | A | A |
| Physical properties of adhesive layer | | | | | | | |
| Hardness: Asker C | | less than 1 | less than 1 | less than 1 | less than 1 | 22 | 21 |
| Hardness: Asker CSR-2 | | 13 | 15 | 14 | 14 | 76 | 72 |
| Adhesive force to mortar (N/25 mm) | | 20 | 17 | 19 | 19 | 2 | 3 |
| Adhesiveness and Followability | | A | A | A | A | C | B |
| Displacement (mm) | | 20 | 20 | 20 | 20 | 2 | 5 |

EP 4 140 736 A1

In Examples 1 to 2, the anti-fouling performance and washability were favorable over long term, and the adhesiveness and followability were also favorable. In contrast, in Comparative Example 1, since the substrate layer used was not subjected to anti-fouling treatment, the anti-fouling performance and washability were poor. Meanwhile, in Comparative Example 2, in which a silicone hard coating agent containing a fluorine-containing silicone compound was not used in the anti-fouling treatment, the anti-fouling performance and washability were initially favorable, but the anti-fouling performance and washability were lowered after the xenon-arc-accelerated exposure test. In Comparative Example 3, 4, in each of which the hardness of the adhesive layer exceeded 5 and the adhesive force to mortar was less than 5 N/25 mm, the anti-fouling performance and washability were favorable over long term; however, since the hardness of the silicone adhesive layer was high and the adhesive force was low, the adhesiveness and followability were poor.

From the foregoing, it was revealed that the inventive anti-fouling silicone composite sheets are capable of keeping excellent anti-fouling performance and washability for long term, easily attachable to an adherend, and followable even to cracking and shifting on the application surface.

Moreover, since the adhesive layers of the inventive anti-fouling silicone composite sheets mainly contain silicone, the weather resistance, heat resistance, and cold resistance are excellent, and the function can be kept for longer period. Further, since the silicone adhesive layer has waterproof effect, it is possible to prevent water infiltration into the application spot, and prevent degradation of the application object or considerably delay the degradation progress.

It should be noted that the present invention is not limited to the above-described embodiments. The embodiments are just examples, and any embodiments that substantially have the same feature and demonstrate the same functions and effects as those in the technical concept disclosed in claims of the present invention are included in the technical scope of the present invention.

**Claims**

1. An anti-fouling silicone composite sheet comprising:

   a substrate layer; and
   a silicone adhesive layer stacked on one surface of the substrate layer, and having a hardness of 5 or less measured with an Asker C hardness tester and an adhesive force of 5 N/25 mm or more with respect to a mortar test piece,
   wherein a surface of the substrate layer which is located on a side opposite to the surface where the silicone adhesive layer is stacked is a surface anti-fouling-treated with a silicone hard coating agent containing a fluorine-containing silicone compound.

2. The anti-fouling silicone composite sheet according to claim 1, wherein the anti-fouling treatment is water repellent treatment, oil repellent treatment, or both the treatments.

3. The anti-fouling silicone composite sheet according to claim 1 or 2, wherein the substrate layer is an anti-UV-treated layer.

4. The anti-fouling silicone composite sheet according to claims 1 to 3, wherein the substrate layer is a substrate layer anti-UV-treated with a silicone hard coating agent containing an anti-UV compound.

5. The anti-fouling silicone composite sheet according to any one of claims 1 to 4, wherein the substrate layer comprises a PET film.

6. The anti-fouling silicone composite sheet according to any one of claims 1 to 5, wherein the substrate layer or the silicone adhesive layer has an anti-light-reflective effect.

7. The anti-fouling silicone composite sheet according to any one of claims 1 to 6, wherein

   the substrate layer has a thickness of 0.05 to 0.3 mm,
   the adhesive layer has a thickness of 0.5 to 3 mm, and
   the anti-fouling silicone composite sheet has a total thickness of 0.55 to 3.3 mm.

8. The anti-fouling silicone composite sheet according to any one of claims 1 to 7, wherein the anti-fouling silicone composite sheet is for preventing graffiti.

9. A method for performing a prevention of graffiti, comprising:

attaching the silicone adhesive layer of the anti-fouling silicone composite sheet according to any one of claims 1 to 8 to a certain adherend; and
the exposing the anti-fouling treated surface of the substrate layer to prevent graffiti on the adherend.

[FIG. 1]

1

2

3

| **INTERNATIONAL SEARCH REPORT** | International application No. |
|---|---|
| | PCT/JP2021/004880 |

**A. CLASSIFICATION OF SUBJECT MATTER**
B32B 27/00(2006.01)i; C09D 5/16(2006.01)i; C09D 183/04(2006.01)i; C09J
183/04(2006.01)i; C09J 7/38(2018.01)i
FI:    C09J7/38;   B32B27/00  M;   C09D5/16;   C09D183/04;   C09J183/04;
       B32B27/00 101; B32B27/00 N
According to International Patent Classification (IPC) or to both national classification and IPC

**B. FIELDS SEARCHED**

Minimum documentation searched (classification system followed by classification symbols)
B32B1/00-43/00;    C09D1/00-10/00;    C09D101/00-201/10;    C09J1/00-5/10;
C09J7/00-7/50; C09J9/00-201/10

Documentation searched other than minimum documentation to the extent that such documents are included in the fields searched
    Published examined utility model applications of Japan    1922-1996
    Published unexamined utility model applications of Japan    1971-2021
    Registered utility model specifications of Japan    1996-2021
    Published registered utility model applications of Japan    1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | WO 2018/070352 A1 (SHIN-ETSU CHEMICAL CO., LTD.)<br>19 April 2018 (2018-04-19) claims 1, 3, paragraphs<br>[0001], [0007], [0009], [0011], [0020]-[0033],<br>[0036]-[0047], examples 1-8, tables 1-2, fig. 1 | 1-4<br>5-9 |
| Y<br>A | JP 2018-24859 A (DAIKIN INDUSTRIES, LTD.) 15<br>February 2018 (2018-02-15) claims 1, 4-8,<br>paragraphs [0002]-[0003], [0005]-[0006], [0013]-<br>[0014], [0020], [0133], examples 1-2, tables 1-3 | 1-4<br>5-9 |
| Y<br>A | JP 2004-175822 A (KAKUSEI SHOJI KK) 24 June 2004<br>(2004-06-24) claims 1-2, paragraphs [0001],<br>[0017], examples, tables 1-3, fig. 1-2 | 1-4<br>5-9 |
| Y<br>A | JP 8-60030 A (DAIKIN INDUSTRIES, LTD.) 05 March<br>1996 (1996-03-05) claim 1, paragraphs [0089],<br>[0120], examples 1-8, table 1 | 1-4<br>5-9 |

☒ Further documents are listed in the continuation of Box C.      ☒ See patent family annex.

| | |
|---|---|
| *   Special categories of cited documents:<br>"A"  document defining the general state of the art which is not considered<br>    to be of particular relevance<br>"E"  earlier application or patent but published on or after the international<br>    filing date<br>"L"  document which may throw doubts on priority claim(s) or which is<br>    cited to establish the publication date of another citation or other<br>    special reason (as specified)<br>"O"  document referring to an oral disclosure, use, exhibition or other means<br>"P"  document published prior to the international filing date but later than<br>    the priority date claimed | "T"  later document published after the international filing date or priority<br>    date and not in conflict with the application but cited to understand<br>    the principle or theory underlying the invention<br>"X"  document of particular relevance; the claimed invention cannot be<br>    considered novel or cannot be considered to involve an inventive<br>    step when the document is taken alone<br>"Y"  document of particular relevance; the claimed invention cannot be<br>    considered to involve an inventive step when the document is<br>    combined with one or more other such documents, such combination<br>    being obvious to a person skilled in the art<br>"&"  document member of the same patent family |

| Date of the actual completion of the international search<br>    14 April 2021 (14.04.2021) | Date of mailing of the international search report<br>    27 April 2021 (27.04.2021) |
|---|---|
| Name and mailing address of the ISA/<br>    Japan Patent Office<br>    3-4-3, Kasumigaseki, Chiyoda-ku,<br>    Tokyo 100-8915, Japan | Authorized officer<br><br><br>Telephone No. |

Form PCT/ISA/210 (second sheet) (January 2015)

INTERNATIONAL SEARCH REPORT

| International application No. |
| --- |
| PCT/JP2021/004880 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | WO 2017/056667 A1 (SHIN-ETSU CHEMICAL CO., LTD.) 06 April 2017 (2017-04-06) claims 1, 5-7, 11, paragraphs [0001], [0006], [0011], [0021]-[0033], [0039], examples 1-3, table 1, fig. 1 | 1-9 |
| A | WO 2016/063693 A1 (SHIN-ETSU CHEMICAL CO., LTD.) 28 April 2016 (2016-04-28) claims 1-3, paragraphs [0010]-[0022], [0033], examples 1-2, table 1, fig. 1 | 1-9 |

Form PCT/ISA/210 (continuation of second sheet) (January 2015)

| | | International application No. |
|---|---|---|
| | | PCT/JP2021/004880 |

| Patent Documents referred in the Report | Publication Date | Patent Family | Publication Date |
|---|---|---|---|
| WO 2018/070352 A1 | 19 Apr. 2018 | US 2019/0241768 A1 claims 1, 3, paragraphs [0001], [0012], [0027], [0031], [0044]-[0067], [0071]-[0085], working examples 1-8, tables 1-2, fig. 1 EP 3527640 A1 KR 10-2019-0070931 A CN 110023082 A | |
| JP 2018-24859 A | 15 Feb. 2018 | US 2019/0169445 A1 claims 21, 24-28, paragraphs [0002]-[0003], [0007]-[0008], [0029]-[0030], [0036], [0118], examples 1-2, tables 1-3 EP 3492259 A1 CN 109476130 A KR 10-2019-0021398 A | |
| JP 2004-175822 A | 24 Jun. 2004 | (Family: none) | |
| JP 8-60030 A | 05 Mar. 1996 | (Family: none) | |
| WO 2017/056667 A1 | 06 Apr. 2017 | US 2018/0251661 A1 claims 1, 5-7, 11, paragraphs [0001], [0011], [0029], [0044]-[0068], [0076], working examples 1-3, table 1, fig. 1 EP 3357986 A1 CN 108026419 A KR 10-2018-0061200 A | |
| WO 2016/063693 A1 | 28 Apr. 2016 | US 2017/0342677 A1 claims 1-3, paragraphs [0031]-[0054], [0072], examples 1-2, table 1, fig. 1 EP 3211139 A1 KR 10-2017-0070185 A CN 107075830 A | |

Form PCT/ISA/210 (patent family annex) (January 2015)

**EP 4 140 736 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005262134 A
- JP H06182290 A
- JP H0994524 A
- JP H10216619 A
- JP 2005097527 A